**Europäisches Patentamt**

**European Patent Office**

**Office européen des brevets**

(19)

(11) Numéro de publication : **0 206 434**
**B1**

(12) **FASCICULE DE BREVET EUROPÉEN**

(45) Date de publication du fascicule du brevet :
28.09.88

(51) Int. Cl.⁴ : **F 22 B 1/00**, F 03 G 7/02,
F 22 B 27/16

(21) Numéro de dépôt : 86201124.4

(22) Date de dépôt : 26.06.86

(54) **Dispositif évaporateur et centrale électrique équipée d'un tel dispositif évaporateur.**

(30) Priorité : 28.06.85 BE 2060730

(43) Date de publication de la demande :
30.12.86 Bulletin 86/52

(45) Mention de la délivrance du brevet :
28.09.88 Bulletin 88/39

(84) Etats contractants désignés :
AT CH DE FR GB IT LI LU NL SE

(56) Documents cités :
EP-A- 0 125 853
BE-A- 350 513
US-A- 1 661-473

(73) Titulaire : **Ven, Juha**
**Desguinlei 206**
**B-2018 Antwerpen (BE)**

**Ven, Kari**
**Desguinlei 206**
**B-2018 Antwerpen (BE)**

**Ven, Petri**
**Desguinlei 206**
**B-2018 Antwerpen (BE)**

**Ven, Timo**
**Desguinlei 206**
**B-2018 Antwerpen (BE)**

(72) Inventeur : **Ven, Juha**
**Desguinlei 206**
**B-2018 Antwerpen (BE)**
Inventeur : **Ven, Kari**
**Desguinlei 206**
**B-2018 Antwerpen (BE)**
Inventeur : **Ven, Petri**
**Desguinlei 206**
**B-2018 Antwerpen (BE)**
Inventeur : **Ven, Timo**
**Desguinlei 206**
**B-2018 Antwerpen (BE)**

(74) Mandataire : **Debrabandere, René et al**
**c/o Bureau De Rycker Charlottalei 48**
**B-2018 Antwerpen (BE)**

## Description

L'invention est relative à un dispositif évaporateur, qui comporte au moins un groupe d'unités de chauffage solaire, unités du type qui possède un volume oblong isolé qui est doté à la partie supérieure d'une rainure, une structure de miroir avec au moins un miroir oblong qui est monté sur le volume pour recueillir le rayonnement solaire et le réfléchir à travers la rainure dans le volume, et une conduite qui s'étend à travers ce volume, les conduites des diverses unités de chauffage solaire du groupe se raccordant entre elles et formant conjointement une conduite à vapeur qui s'étend successivement à travers les diverses unités de chauffage solaire, dispositif évaporateur qui comporte en outre des moyens d'alimentation pour amener du liquide à vaporiser.

Un dispositif évaporateur de ce genre est connu d'après le BE-A-901 640 au nom des demandeurs.

Dans ce dispositif évaporateur connu, la conduite à vapeur forme une conduite de retour qui relie le côté supérieur d'un vase d'expansion à son côté inférieur. Les moyens pour amener le liquide à évaporer sont formés par une tête de pulvérisation par l'intermédiaire de laquelle de l'eau est amenée à la partie la plus haute du vase d'expansion. Une partie de l'eau injectée se vaporise par suite de la brusque expansion. Une partie de l'eau qui se trouve dans le bas du vase d'expansion, se vaporise également, parce que de la vapeur déjà formée provenant du volume supérieur est ajoutée par l'intermédiaire de la conduite à vapeur et donc après échauffement dans les unités de chauffage solaire, à cette eau.

La vaporisation de l'eau n'a donc pas lieu dans la conduite à vapeur elle-même, mais bien dans un vase d'expansion.

Ce vase d'expansion complique cependant la construction du dispositif.

L'invention a pour but d'offrir un dispositif évaporateur du type précité qui est de structure simple et relativement peu onéreux, et qui ne comprend entre autres pas de vase d'expansion.

A cette fin, les moyens d'alimentation pour amener du liquide comprennent au moins une conduite d'alimentation en liquide et des raccordements qui se raccordent en différents endroits à la conduite à vapeur, et le dispositif évaporateur comporte un mécanisme de réglage de courant aux deux extrémités de la conduite à vapeur, qui peut obturer chacune de ces extrémités partiellement au moins tandis que l'autre extrémité est plus fortement ouverte, afin de déterminer ainsi le sens d'écoulement dans la conduite à vapeur.

L'injection du liquide à vaporiser a lieu directement dans la conduite à vapeur où ce liquide se vaporise. Au moyen d'un mécanisme régulateur de débit, on peut inverser le sens d'écoulement de la vapeur dans la conduite à vapeur lorsque la température à l'endroit de l'unité de chauffage solaire du groupe qui est atteinte en dernier lieu avec le premier sens d'écoulement précité, est devenue trop élevée.

Dans une forme de réalisation particulière de l'invention, le mécanisme régulateur de courant comporte une soupape distincte sur chacune des extrémités de la conduite à vapeur.

De préférence, ces soupapes sont des soupapes régulatrices de débit.

Dans une forme de réalisation remarquable de l'invention, le dispositif évaporateur comporte des appareils de mesure de température qui sont montés en divers endroits de la conduite à vapeur, et un dispositif de commande qui commande le mécanisme régulateur de courant en fonction des températures mesurées par les appareils de mesure de température.

Dans une forme de réalisation avantageuse de l'invention, les raccordements des moyens d'alimentation pour la fourniture de liquide, se raccordent à la conduite à vapeur en dehors des volumes isolés des unités de chauffage solaire.

De préférence, un tel raccordement se raccorde à la conduite à vapeur au voisinage d'une extrémité du volume isolé de chacune des unités de chauffage solaire.

Dans une forme de réalisation utile de l'invention, le dispositif évaporateur comporte plusieurs groupes d'unités d'évaporation et les conduites à vapeur des divers groupes sont raccordées entre elles.

Le dispositif évaporateur suivant une des formes de réalisation ci-avant convient particulièrement bien pour la production de vapeur pour une centrale électrique.

L'invention est par conséquent aussi relative à une centrale électrique qui comporte au moins un générateur de vapeur et au moins un groupe turbine à vapeur-générateur qui lui est raccordé, et dont l'élément caractéristique réside en ce que le générateur de vapeur est un dispositif évaporateur suivant une des formes de réalisation précédentes.

D'autres particularités et avantages de l'invention ressortiront de la description ci-après d'un dispositif évaporateur et d'une centrale électrique équipée d'un tel dispositif évaporateur, suivant l'invention ; cette description est uniquement donnée à titre d'exemple et ne limite pas l'invention ; les chiffres de référence concernent les dessins annexés.

La figure 1 est un schéma de blocs d'une centrale électrique équipée d'un dispositif évaporateur suivant l'invention.

La figure 2 est une représentation schématique du dispositif évaporateur de la centrale électrique suivant la figure 1.

Dans les deux figures, les mêmes chiffres de référence concernent les mêmes éléments.

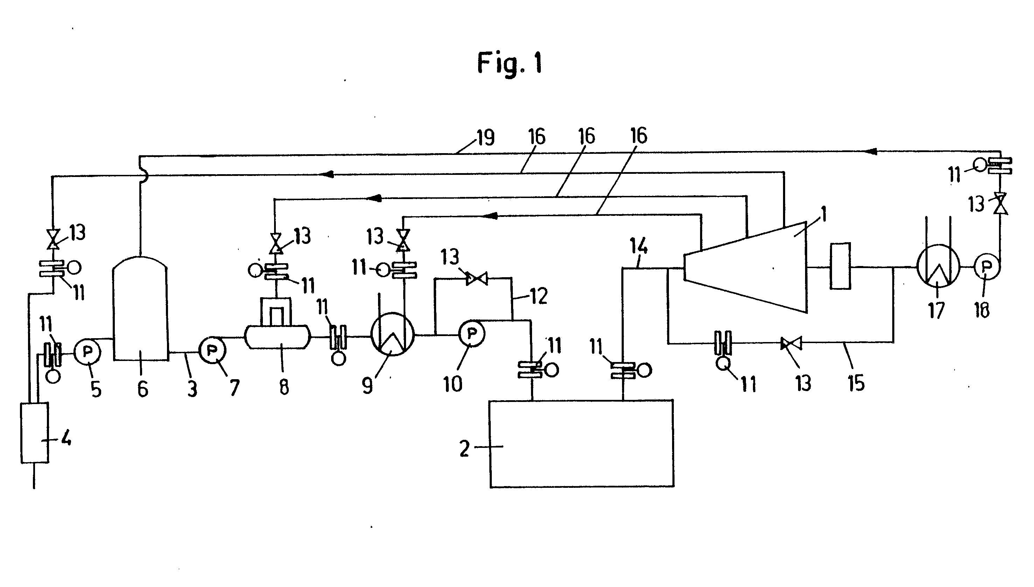

La centrale électrique suivant la figure 1 comporte essentiellement un groupe turbine à vapeur-alternateur 1 et un dispositif évaporateur d'eau ou générateur de vapeur 2.

De l'eau est amenée au générateur de vapeur 2 par une conduite d'alimentation 3 dans laquelle sont montés successivement un dispositif de traitement d'eau 4 pour la déminéralisation de l'eau, une pompe 5, un réservoir d'emmagasinage d'eau 6, une pompe 7, un reniflard 8, un échangeur de chaleur 9 et une pompe 10.

En aval de la pompe 5, de l'échangeur de chaleur 9 et du générateur de vapeur 2, des débitmètres 11 sont montés dans la conduite d'alimentation en eau 3.

La pompe 10 est shuntée par une conduite de shunt 12 dans laquelle est montée une soupape pneumatique 13.

La vapeur d'eau est envoyée du générateur de vapeur 2 vers le groupe turbine à vapeur-alternateur 1 par une conduite à vapeur d'eau 14 dans laquelle un débitmètre 11 est monté.

Le groupe 1 est shunté par une conduite de dérivation 15 dans laquelle, en plus d'un débitmètre 11, une soupape pneumatique 13 est montée.

La turbine à vapeur est une turbine à quatre étages et une partie de la vapeur d'échappement du premier, du second et du troisième étage est renvoyée par des conduites 16, respectivement vers le dispositif de traitement d'eau 4, vers le reniflard 8 et par l'intermédiaire de l'échangeur de chaleur 9, vers une évacuation. Dans chacune des trois conduites 16 sont montés un débitmètre 11 et une soupape pneumatique 13.

La vapeur d'échappement qui quitte le quatrième étage de la turbine à vapeur, est renvoyée après le refroidissement dans un échangeur de chaleur 17, au moyen d'une pompe 18 et par une conduite 19 dans laquelle sont montés une soupape pneumatique 13 et un débitmètre 11, vers le réservoir d'emmagasinage d'eau 6.

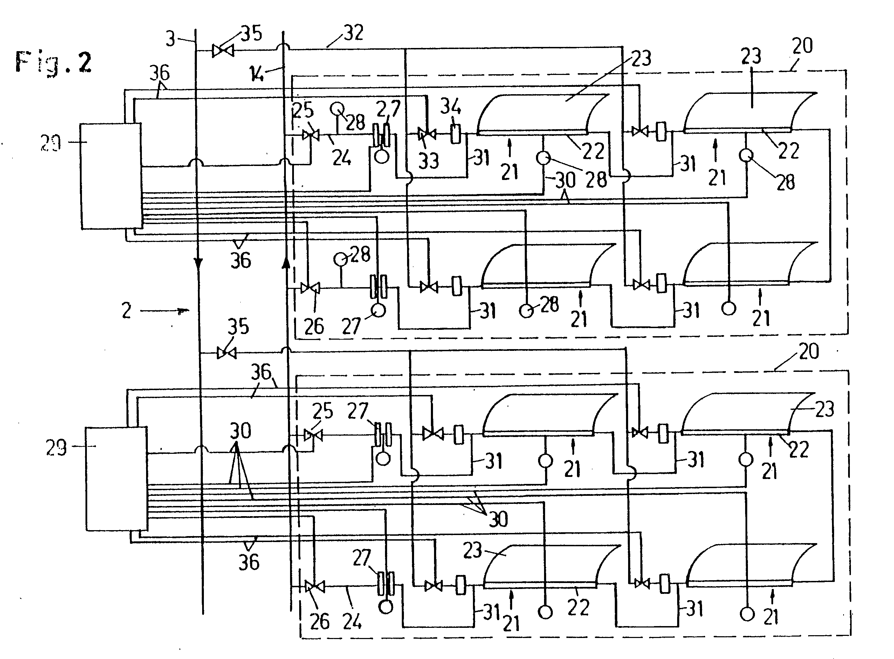

Ainsi qu'il ressort de la figure 2, le générateur de vapeur 2 comporte un certain nombre de groupes d'unités de chauffage solaire. A la figure 2, deux de ces groupes sont représentés, désignés dans leur ensemble par la référence 20, de quatre unités de chauffage solaire, désignées dans leur ensemble par la référence 21. Il est cependant évident que chaque groupe 20 peut comprendre plus de quatre unités de chauffage solaire, tout comme le générateur de vapeur 2 peut aussi posséder plus de deux groupes 20.

Les unités de chauffage solaire ont une structure connue en soi et ne seront décrites ci-après que brièvement dans la mesure requise pour rendre l'invention claire.

Ces unités de chauffage 21 sont du type constitué par un volume oblong 22 fermé, isolé thermiquement, qui est doté sur son côté supérieur d'une rainure s'étendant suivant la direction longitudinale pour le rayonnement solaire, une conduite pour un fluide à échauffer qui s'étend à travers le volume, et une structure de miroir qui est montée sur le côté supérieur du volume et comporte au moins un miroir oblong 23 qui s'étend parallèlement à la rainure, qui recueille le rayonnement solaire et le réfléchit, soit directement, soit par l'intermédiaire de miroirs supplémentaires, à travers la rainure dans le volume 22.

Des unités de chauffage solaire 21 appropriées de ce type sont notamment décrites dans les brevets belges n° 888.400 et n° 901.638, et dans le brevet européen n° 62.961. L'unité de chauffage solaire décrite dans le brevet belge n° 902.767 du 28 juin 1985 au nom des demandeurs surtout convient particulièrement bien.

Les unités de chauffage 21 d'un même groupe 20 sont montées en série dans une même conduite à vapeur d'eau 24, les conduites s'étendant à travers le volume 22 des unités de chauffage solaire 21 faisant donc partie de la conduite à vapeur d'eau 24.

La conduite à vapeur d'eau 24 se raccorde par ses deux extrémités à la conduite à vapeur d'eau 14 précitée de la centrale électrique. Aux deux extrémités de la conduite à vapeur d'eau 24 est montée une soupape régulatrice de débit 25, 26 respectivement.

Sur le côté opposé à la conduite à vapeur d'eau 14 des soupapes régulatrices de débit 25 et 26, un débitmètre 27 est monté dans la conduite à vapeur d'eau 24 du groupe 20.

Entre ces débitmètres 27 et ces soupapes régulatrices de débit 25 et 26 sont montés des appareils de mesure de température 28. Sur la conduite dans le volume 22 de chacune des unités de chauffage solaire 21, est également monté un appareil de mesure de température 28.

Les deux soupapes régulatrices de débit 25 et 26 sont des soupapes électriques qui sont commandées par un dispositif de commande 29 avec lequel se trouvent en liaison les débitmètres 27 et appareils de mesure de température 28 précités, ainsi que les soupapes 25 et 26, par des lignes 30.

Ainsi que décrit ci-après, on peut déterminer au moyen des soupapes régulatrices de débit 25 et 26, le sens d'écoulement de la vapeur d'eau dans la conduite à vapeur d'eau 24 d'un groupe 20.

Tel que considéré dans le sens de la soupape régulatrice de débit 25 vers la soupape régulatrice de débit 26, la conduite à vapeur d'eau 24 d'un groupe 20 forme avant chacune des deux premières unités de chauffage solaire 21 et après chacune des deux dernières unités de chauffage solaire 21, une boucle de dilatation qui est désignée à la figure 2 par la référence 31.

L'eau à vaporiser amenée par la conduite d'alimentation 3 est amenée en différents endroits directement à la conduite à vapeur 24 d'un groupe 20, et en fait à l'endroit de chaque boucle 31.

Par groupe 20 se raccorde dans ce but à la conduite d'alimentation 3, une dérivation 32 qui se raccorde au moyen d'un raccordement 33, 34 à l'endroit de chacune des boucles 31, à la conduite à vapeur d'eau 24.

L'amenée d'eau par la dérivation 32 de chaque groupe 20 peut être coupée par une soupape d'obturation 35 montée dans cette conduite.

Chaque raccordement 33, 34 est constitué par une soupape régulatrice de débit 33 et un injecteur d'eau 34 avec lequel de l'eau sous pression et avec un débit déterminé par la soupape régulatrice 33, peut être injectée dans la conduite à vapeur d'eau 24.

L'injecteur d'eau est raccordé à l'endroit d'une boucle 31 sur la conduite à vapeur d'eau 24 de telle sorte qu'il soit dirigé avec son ouverture d'injection axialement dans la conduite s'étendant à travers le volume 22 de l'unité de chauffage solaire 21 située à côté de la boucle 31.

Quand un groupe 20 est mis en service, parce que la soupape d'obturation 35 dans la dérivation 32 correspondante est ouverte, de l'eau est injectée dans chaque unité de chauffage solaire 21 de celle-ci, par un injecteur d'eau 34.

La quantité d'eau injectée est réglée séparément pour chaque unité de chauffage solaire 21 par la soupape régulatrice de débit 33 qui est montée immédiatement avant l'injecteur d'eau 34 concerné.

Toutes les soupapes régulatrices de débit 33 sont reliées par des lignes 36 au dispositif de commande électronique 29 et les quantités injectées sont réglées en fonction des bilans thermiques qui sont déterminés sur la base des températures mesurées par les appareils de mesure de température 28.

L'eau injectée dans une unité de chauffage solaire 21 se vaporise, tout au moins partiellement, dans la conduite de l'unité. La vapeur d'eau formée continue à s'écouler dans la conduite à vapeur d'eau 24 dans le sens qui est fonction de la position des soupapes régulatrices de débit 25 et 26, et elle s'écoule par l'intermédiaire d'une de ces soupapes qui est ouverte, dans la conduite à vapeur d'eau 14 de la centrale électrique.

Lors de la mise en route du groupe 20, la conduite à vapeur d'eau 24 est vide. Pendant le fonctionnement, elle se remplit de vapeur d'eau et éventuellement d'eau chaude. Cette vapeur d'eau est échauffée à chaque passage par une unité de chauffage solaire 21 suivante, d'une part, et refroidie, d'autre part, parce que de l'eau froide est injectée et vaporisée dans cette unité 21.

Cependant, la température de la vapeur d'eau, après qu'un équilibre soit atteint pour un sens d'écoulement déterminé, augmentera au fur et à mesure qu'elle s'approche de la sortie de la conduite à vapeur d'eau 24. Après un certain temps, le sens d'écoulement de cette vapeur d'eau est inversé pour cette raison en fermant la soupape régulatrice de débit 25 ou 26 qui était ouverte, et en ouvrant l'autre soupape régulatrice de débit 26 ou 25, qui était fermée.

La température de la vapeur d'eau obtenue est ajustée en réglant la quantité d'eau injectée à l'aide des soupapes régulatrices de débit 33.

La quantité de vapeur d'eau obtenue dépend il est vrai de la quantité d'eau injectée, mais elle est réglée principalement en mettant en circuit plus au moins de groupes 20.

Quand on utilise des unités de chauffage solaire 21 du type décrit dans le brevet belge n° 902.767 du 28 juin 1985, on peut encore, grâce à l'excellent isolement des volumes 22 de ces unités, produire de la vapeur longtemps après la disparition du rayonnement solaire. Il est même possible de produire de la vapeur toute la nuit en utilisant l'énergie solaire qui a été accumulée pendant le jour dans la matière d'accumulation thermique qui se trouve dans le volume 22 des unités de chauffage thermique 21.

La centrale décrite ci-avant peut être très peu coûteuse. La production de vapeur n'est pas seulement économique, mais elle peut être adaptée très aisément aux besoins.

L'invention n'est en aucune façon limitée à la forme de réalisation décrite, et dans le cadre de la demande de brevet, on peut apporter à la forme de réalisation décrite de nombreuses modifications, notamment en ce qui concerne la forme, la composition, l'agencement et le nombre des éléments qui sont utilisés pour la mise en oeuvre de l'invention.

En particulier, le liquide à vaporiser ne doit pas nécessairement être de l'eau. Il peut par exemple être un dérivé chloré et fluoré du méthane ou de l'éthane, par exemple le fluide vendu sous la marque fréon.

**Revendications**

1. Dispositif évaporateur (2) qui comporte au moins un groupe (20) d'unités de chauffage solaire (21), unités du type qui possède un volume oblong isolé (22) qui est doté à la partie supérieure d'une rainure, une structure de miroir avec au moins un miroir oblong (23) qui est monté sur le volume (22) pour recueillir le rayonnement solaire et le réfléchir à travers la rainure dans le volume (22), et une conduite qui s'étend à travers le volume (22), les conduites des diverses unités de chauffage solaire (21) du groupe (20) se raccordant entre elles et formant conjointement une conduite à vapeur (24) qui s'étend successivement à travers les diverses unités de chauffage solaire (21), dispositif évaporateur (2) qui comporte en outre des moyens d'alimentation (32, 33, 34) pour amener du liquide à vaporiser, caractérisé en ce que les moyens d'alimentation (32, 33, 34) pour amener du liquide comprennent au moins une conduite d'alimentation en liquide (32) et des raccordements (33, 34) qui se raccordent en différents endroits à la conduite à vapeur (24), et le dispositif évaporateur (2) comporte un mécanisme régulateur de courant (25, 26) aux deux extrémités de la conduite à vapeur (24), qui peut obturer au moins partiellement chacune de ces extrémités tandis que l'autre extrémité est plus fortement ouverte, afin de déterminer ainsi le sens d'écoulement dans la conduite à vapeur (24).

2. Dispositif évaporateur suivant la revendication 1, caractérisé en ce que le mécanisme régulateur de courant (25, 26) comporte une soupape distincte (25 ou 26) à chacune des extrémités de la conduite à vapeur (14, 24).

3. Dispositif évaporateur suivant la revendication 2, caractérisé en ce que ces soupapes (25 et 26) sont des soupapes régulatrices de débit.

4. Dispositif évaporateur suivant l'une quelconque des revendications 1 à 3 caractérisé en ce qu'il comprend des appareils de mesure de température (28) qui sont montés en différents endroits de la conduite à vapeur (24) et un dispositif de commande (29) qui commande le mécanisme régulateur de courant (25, 26) en fonction des températures mesurées par les appareils de mesure de température (28).

5. Dispositif évaporateur suivant l'une quelconque des revendications 1 à 4, caractérisé en ce que les raccordements (33, 34) des moyens d'alimentation (32, 33, 34) pour amener du liquide, se raccordent à la conduite à vapeur (24) en dehors des volumes isolés (22) des unités de chauffage solaire (21).

6. Dispositif évaporateur suivant la revendication 5, caractérisé en ce qu'un tel raccordement (32, 33) se raccorde à la conduite à vapeur (24) au voisinage d'une extrémité du volume isolé (22) de chacune des unités de chauffage solaire (21).

7. Dispositif évaporateur suivant l'une ou l'autre des revendications 5 et 6, caractérisé en ce que les raccordements (33, 34) des moyens d'alimentation (32, 33, 34) comportent chacun un dispositif injecteur de liquide (34), qui injecte le liquide sous pression dans la conduite à vapeur (24).

8. Dispositif évaporateur suivant la revendication 7, caractérisé en ce que le dispositif injecteur de liquide (34) de chaque raccordement (33, 34) est dirigé avec son ouverture d'injection de telle sorte et est situé en un endroit tel qu'il injecte suivant une direction axiale dans la conduite qui s'étend à travers le volume (22) d'une unité de vaporisation (21).

9. Dispositif évaporateur suivant l'une ou l'autre des revendications 7 et 8, caractérisé en ce que chaque raccordement (33, 34) des moyens d'alimentation (32, 33, 34) pour amener du liquide, comporte également une soupape régulatrice de débit (33).

10. Dispositif évaporateur suivant l'une quelconque des revendications 1 à 9, caractérisé en ce que la conduite à vapeur (24) d'un groupe (20) d'unités de chauffage solaire (21) forme au voisinage d'une des extrémités de chacune des unités de chauffage solaire (21) proprement dites, une boucle de dilatation (31).

11. Dispositif évaporateur suivant les revendications 8 et 10, caractérisé en ce que les moyens d'alimentation (32, 33, 34) pour amener du liquide, se raccordent à l'aide d'un raccordement (33, 34) à l'endroit de chaque boucle (31) sur la conduite à vapeur (24).

12. Dispositif évaporateur suivant l'une quelconque des revendications 1 à 11, caractérisé en ce qu'il comporte plusieurs groupes (20) d'unités de chauffage solaire (21) et les conduites à vapeur (24) des divers groupes (20) sont raccordées mutuellement.

13. Dispositif évaporateur suivant la revendication 12, caractérisé en ce que les conduites à vapeur (24) de divers groupes (20) sont raccordées aux deux extrémités d'une même conduite à vapeur commune (14).

14. Dispositif évaporateur suivant l'une ou l'autre des revendications 12 et 13, caractérisé en ce que les conduites d'alimentation en liquide (32) des moyens d'alimentation en liquide (32, 33, 34) de différents groupes (20) forment des dérivations qui sont raccordées à une conduite d'alimentation en liquide commune (3).

15. Dispositif évaporateur suivant la revendication 14, caractérisé en ce qu'une soupape d'obturation (35) est montée dans la conduite d'alimentation en liquide (32) des moyens d'alimentation en liquide (32, 33, 34) de chaque groupe (20).

16. Dispositif évaporateur suivant l'une quelconque des revendications 1 à 15, caractérisé en ce qu'il constitue un générateur de vapeur (2) d'une centrale électrique.

17. Centrale électrique, qui comporte au moins un générateur de vapeur (2) et au moins un groupe turbine à vapeur-générateur (1) qui lui est raccordé, générateur de vapeur (2) qui comporte au moins un groupe (20) d'unités de chauffage solaire (21) d'un type qui possède un volume oblong isolé (22) qui est doté à la partie supérieure d'une rainure, une structure de miroir avec au moins un miroir oblong (23), qui est monté sur le volume (23) pour recueillir le rayonnement solaire et le réfléchir à travers la rainure dans le volume (22), et une conduite qui s'étend à travers le volume (22), les conduites des différentes unités de chauffage solaire (21) du groupe (20) se raccordant mutuellement et formant conjointement une conduite à vapeur (24) qui s'étend successivement à travers les diverses unités de chauffage solaire (21), générateur de vapeur (2) qui comporte en outre des moyens d'alimentation (32, 33, 34) pour amener du liquide à vaporiser, caractérisée en ce que les moyens d'alimentation (32, 33, 34) pour amener du liquide comportent au moins une conduite d'alimentation en liquide (32) et des raccordements (33, 34) qui se raccordent en différents endroits à la conduite à vapeur (24) et le générateur de vapeur (2) comporte un mécanisme régulateur de courant (25, 26) aux deux extrémités de la conduite à vapeur (24) qui peut obturer au moins partiellement chacune de ces extrémités tandis que l'autre extrémité est ouverte plus fortement, afin de déterminer ainsi le sens d'écoulement dans la conduite à vapeur (24).

**Claims**

1. Evaporating device (2) which comprises at least one set (20) of solar heating units (21) of that type which has an insulated oblong room (22) which is provided at the top with a slit, a mirror structure with at least one oblong mirror (23) which is mounted on said room (22) to collect the sun radiation and reflect same through the slit into said room (22), and a pipe which extends through said room (22), whereby the pipes from the various solar heating units (21) from the set (20) connect to one another and form together a vapour pipe (24) which extends in sequence through the various solar heating units (21), which evaporating device (2) further comprises supply means (32, 33, 34) to feed liquid to be vaporized, characterized in that said supply means (32, 33, 34) to feed liquid comprise at least one liquid supply pipe (32) and connections (33, 34) which connect in various locations to the vapour pipe (24), and the evaporating device (2) comprises a flow-regulating mechanism (25, 26) at both ends of said vapour pipe (24) which can close partly at least each of said ends while the other end is opened more to thus determine the flow direction inside the vapour pipe (24).

2. Evaporating device as defined in claim 1, characterized in that the flow-regulating mechanism (25, 26) comprises a discrete valve (25 or 26) on each end of the vapour pipe (14, 24).

3. Evaporating device as defined in claim 2, characterized in that said valves (25 and 26) are flowrate regulating valves.

4. Evaporating device as defined in any one of claims 1 to 3, characterized in that it comprises temperature meters (28) which are mounted in various locations of the vapour pipe (24), and a control device (29) which controls the flow-regulating mechanism (25, 26) as a function of the temperatures being measured by the temperature meters (28).

5. Evaporating device as defined in any one of claims 1 to 4, characterized in that the connections (33, 34) of the supply means (32, 33, 34) to feed liquid, connect to the vapour pipe (24) outside the insulated rooms (22) from the solar heating units (21).

6. Evaporating device as defined in claim 5, characterized in that such a connection (32, 33) connects to the vapour pipe (24) next to the one end of the insulated room (22) from each of said solar heating units (21).

7. Evaporating device as defined in either one of claims 5 and 6, characterized in that the connections (33, 34) of the supply means (32, 33, 34) each comprise a liquid-injecting device (34) which injects the liquid under pressure into the vapour pipe (24).

8. Evaporating device as defined in claim 7, characterized in that the liquid-injecting device (34) from each connection (33, 34) is so directed with its injection opening and is so located that it injects axially in that pipe which extends through the room (22) from an evaporating unit (21).

9. Evaporating device as defined in either one of claims 7 and 8, characterized in that each connection (33, 34) of the supply means (32, 33, 34) to feed liquid, further comprises a flow-rate regulating valve (33).

10. Evaporating device as defined in any one of claims 1 to 9, characterized in that the vapour pipe (24) from a set (20) of solar heating units (21) forms an expansion loop (31) next to the one end of each of said solar heating units (21) proper.

11. Evaporating device as defined in claims 8 and 10, characterized in that the supply means (32, 33, 34) to feed liquid connect by means of a connection (33, 34) to the vapour pipe (24) in the location of each loop (31).

12. Evaporating device as defined in any one of claims 1 to 11, characterized in that it comprises a plurality of sets (20) of solar heating units (21), and the vapour pipes (24) from the various sets (20) are connected to one another.

13. Evaporating device as defined in claim 12, characterized in that the vapour pipes (24) from various sets (20) are connected with both ends thereof to one and the same common vapour pipe (14).

14. Evaporating device as defined in either one of claims 12 and 13, characterized in that the liquid supply pipes (32) from the liquid supply means (32, 33, 34) from various sets (20), form branch pipes which connect to a common liquid supply pipe (3).

15. Evaporating device as defined in claim 14, characterized in that in the liquid supply pipe (32) from the liquid supply means (32, 33, 34) from each set (20), a cut-off valve (35) is mounted.

16. Evaporating device as defined in any one of claims 1 to 15, characterized in that it is a vapour generator (2) from an electric power station.

17. Electric power station, which comprises at least one vapour generator (2) and at least one vapour turbine-generator set (1) connected thereto, which vapour generator (2) comprises at least one set (20) of solar heating units (21) of a type which has an insulated oblong room (22) which is provided at the top with a slit, a mirror structure with at least one oblong mirror (23) which is mounted on said room (22) to collect the sun radiation and reflect same through said slit into the room (22), and a pipe which extends through said room (22), whereby the pipes from the various solar heating units (21) of the set (20) connect to one another and form together a vapour pipe (24) which extends in sequence through the various solar heating units (21), which vapour generator (2) further comprises supply means (32, 33, 34) to feed liquid to be vaporized, characterized in that said supply means (32, 33, 34) to feed liquid comprise at least one liquid supply pipe (32) and connections (33, 34) which connect in various locations to said vapour pipe (24), and the vapour generator (2) comprises a flow-regulating mechanism (25, 26) on both ends of said vapour pipe (24) which can close partly at least each of said ends while the other end is opened more, to so determine the flow direction inside said vapour pipe (24).

**Patentansprüche**

1. Verdampfereinrichtung (2), die wenigstens eine Gruppe (20) von Solarheizungseinheiten (21) eines Typs umfaßt, der einen länglichen isolierten Raum (22) besitzt, welcher im oberen Teil mit einer Aussparung versehen ist, eine Spiegelstruktur mit wenigstens einem länglichen Spiegel (23), der auf dem Raum (22) befestigt ist, um die Sonnenstrahlung zu sammeln und sie durch die Aussparung im Raum (22) zu reflektieren, und eine Leitung, die sich durch den Raum (22) erstreckt, wobei die Leitungen der verschiedenen Solarheizungseinheiten (21) der Gruppe (20) miteinander verbunden sind und gemeinschaftlich eine Dampfleitung (24) bilden, die sich nacheinander durch die verschiedenen Solarheizungseinheiten (21) erstreckt, wobei die Verdampfereinrichtung (2) weiterhin Versorgungsmittel (32, 33, 34) umfaßt, um Flüssigkeit zum Verdampfen zuzuführen, dadurch gekennzeichnet, daß die Versorgungsmittel (32, 33, 34) zum Zuführen der Flüssigkeit wenigstens eine Flüssigkeitsversorgungsleitung (32) und Verbindungen (33, 34) umfassen, die an verschiedenen Stellen mit der Dampfleitung (24) verbunden sind, und daß die Verdampfereinrichtung (2) einen Stromregulationsmechanismus (25, 26) an den zwei Enden der Dampfleitung (24) umfaßt, der wenigstens teilweise jedes dieser Enden verschließen kann, während das andere Ende stärker geöffnet ist, um so die Richtung des Abflusses in der Dampfleitung (24) zu bestimmen.

2. Verdampfereinrichtung nach Anspruch 1, dadurch gekennzeichnet, daß der Stromregulationsmechanismus (25, 26) ein getrenntes Ventil (25 oder 26) an jedem Ende der Dampfleitung (14, 24) aufweist.

3. Verdampfereinrichtung nach Anspruch 2, dadurch gekennzeichnet, daß diese Ventile (25 und 26) Durchflußregulationsventile sind.

4. Verdampfereinrichtung nach einem der Ansprüche 1 bis 3, dadurch gekennzeichnet, daß sie Temperaturmeßeinrichtungen (28) umfaßt, die an verschiedenen Stellen der Dampfleitung (24) befestigt sind und eine Steuereinrichtung (29), die den Stromregulationsmechanismus (25, 26) in Abhängigkeit der durch die Temperaturmeßeinrichtungen (28) gemessenen Temperaturen steuert.

5. Verdampfereinrichtung nach einem der Ansprüche 1 bis 4, dadurch gekennzeichnet, daß die Verbindungen (33, 34) der Versorgungsmittel (32, 33, 34) zur Zuführung der Flüssigkeit mit der Dampfleitung (24) außerhalb der isolierten Räume (22) der Solarheizungseinheiten (21) verbunden sind.

6. Verdampfereinrichtung nach Anspruch 5, dadurch gekennzeichnet, daß eine solche Verbindung (32, 33) mit der Dampfleitung (24) in der Nachbarschaft eines Endes des isolierten Raumes (22) einer jeden Solarheizungseinheit (21) verbunden ist.

7. Verdampfereinrichtung nach einem der Ansprüche 5 oder 6, dadurch gekennzeichnet, daß die Verbindungen (33, 34) der Versorgungsmittel (32, 33, 34) je eine Flüssigkeitseinspritzvorrichtung (34) aufweisen, die die Flüssigkeit unter Druck in die Dampfleitung (24) einspritzt.

8. Verdampfereinrichtung nach Anspruch 7, dadurch gekennzeichnet, daß die Flüssigkeitseinspritzeinrichtung (34) jeder Verbindung (33, 34) mit ihrer Einsprltzöffnung so gerichtet und an einer Stelle so angeordnet ist, daß sie in einer axialen Richtung in die Leitung einspritzt, die sich durch den Raum (22) einer Verdampfereinheit (21) erstreckt.

9. Verdampfereinrichtung nach einem der Ansprüche 7 oder 8, dadurch gekennzeichnet, daß jede Verbindung (33, 34) der Versorgungsmittel (32, 33, 34) zum Zuführen der Flüssigkeit in gleicher Weise ein Durchflußregulationsventil (33) enthält.

10. Verdampfereinrichtung nach einem der Ansprüche 1 bis 9, dadurch gekennzeichnet, daß die Dampfleitung (24) einer Gruppe (22) von Solarheizungseinheiten (21) in der Nachbarschaft eines der Enden von jeder eigentlichen Solarheizungseinheit (21) eine Erweiterungsschleife (31) bildet.

11. Verdampfereinrichtung nach den Ansprüchen 8 und 10, dadurch gekennzeichnet, daß die Versorgungsmittel (32, 33, 34) zum Zuführen der Flüssigkeit mit Hilfe einer Verbindung (33, 34) an der Stelle einer jeden Schleife (31) auf der Dampfleitung (24) verbunden sind.

12. Verdampfereinrichtung nach einem der Ansprüche 1 bis 11, dadurch gekennzeichnet, daß sie mehrere Gruppen (20) von Solarheizungseinheiten (21) aufweist und die Dampfleitungen (24) der verschiedenen Gruppen (20) gegenseitig verbunden sind.

13. Verdampfereinrichtung nach Anspruch 12, dadurch gekennzeichnet, daß die Dampfleitungen (24) der verschiedenen Gruppen (20) an den beiden Enden einer gleichen gemeinschaftlichen Dampfleitung (14) verbunden sind.

14. Verdampfereinrichtung nach einem der Ansprüche 12 oder 13, dadurch gekennzeichnet, daß die Flüssigkeitsversorgungsleitungen (32) der Flüssigkeitsversorgungsmittel (32, 33, 34) der verschiedenen Gruppen (20) Abzweigungen bilden, die mit einer gemeinschaftlichen Flüssigkeitsversorgungsleitung (3) verbunden sind.

15. Verdampfereinrichtung nach Anspruch 14, dadurch gekennzeichnet, daß ein Verschlußventil (35) in der Flüssigkeitsversorgungsleitung (32) der Flüssigkeitsversorgungsmittel (32, 33, 34) einer jeden Gruppe (20) befestigt ist.

16. Verdampfereinrichtung nach einem der Ansprüche 1 bis 15, dadurch gekennzeichnet, daß sie einen Dampferzeuger (2) einer elektrischen Kraftanlage bildet.

17. Elektrische Kraftanlage, die wenigstens einen Dampferzeuger (2) und wenigstens eine Dampferzeugerturbinengruppe (1) aufweist, die mit ihm verbunden ist, wobei der Dampferzeuger (2) wenigstens eine Gruppe (20) von Solarheizungseinheiten (21) eines Typs umfaßt, der einen länglichen isolierten Raum (22) besitzt, welcher im oberen Teil mit einer Aussparung versehen ist, eine Spiegelstruktur mit wenigstens einem länglichen Spiegel (23), der auf dem Raum (23) befestigt ist, um die Sonnenstrahlung zu sammeln und sie durch die Aussparung im Raum (22) zu reflektieren, und eine Leitung, die sich durch den Raum (22) erstreckt, wobei die Leitungen der verschiedenen Solarheizungseinheiten (21) der Gruppe (20) gegenseitig verbunden sind und gemeinschaftlich eine Dampfleitung (24) bilden, die sich nacheinander durch die verschiedenen Solarheizungseinheiten (21) erstreckt, wobei der Dampferzeuger (2) weiterhin Versorgungsmittel (32, 33, 34) zum Zuführen von Flüssigkeit zum Verdampfen aufweist, dadurch gekennzeichnet, daß die Versorgungsmittel (32, 33, 34) zum Zuführen von Flüssigkeit wenigstens eine Flüssigkeitsversorgungsleitung (32) und Verbindungen (33, 34) aufweisen, die an verschiedenen Stellen mit der Dampfleitung (24) verbunden sind und daß der Dampferzeuger (2) einen Stromregulationsmechanismus (25, 26) an beiden Enden der Dampfleitung (24) aufweist, der wenigstens teilweise jede dieser Enden verschließen kann, während das andere Ende stärker geöffnet ist, um so die Richtung des Abflusses in der Dampfleitung (24) zu bestimmen.

# Fig. 1

0 206 434

Fig. 2